# EUROPEAN PATENT APPLICATION

(11) **EP 1 014 623 A2**
(43) Date of publication of application: **28.06.2000**
(21) Application number: 99124061.5
(22) Date of filing: 10.12.1999
(51) Int. Cl.: H04L 12/28, H04L 29/06

(54) **Radio server, mobile unit, and recording medium**

(30) Priority: 10.12.1998 JP 35197398
(71) Applicant: Mitsubishi Materials Corporation, Chiyoda-ku, Tokyo 100-004 (JP)
(72) Inventor: Tari, Kazuyoshi, Mitsubishi Materials Corporation, Omiya-shi, Saitama 330-0835 (JP); Unoki, Hiroyuki, Mitsubishi Materials Corporation, Omiya-shi, Saitama 330-0835 (JP); Nagira, Tumoru, Mitsubishi Materials Corporation, Omiya-shi, Saitama 330-0835 (JP)
(74) Representative: HOFFMANN - EITLE

(57) **Abstract**

A radio server (1) is provided which enables a packet destine for a mobile unit (3) to be surely routed to the mobile unit (3) even when the mobile unit (3) moves and a communication zone is changed. The radio server (1) establishes communications between itself and the mobile unit (3) using radio communications via one of a plurality of base station radios (2-n). The radio server (1) comprises a mobile unit searcher (1d) for analyzing the packet destined for the mobile unit (3) and searching the mobile unit (3) based on a destination address of the analyzed packet; a search request transmitter (1e) for transmitting a search request including the destination address; and a search reply receiver (1f) for receiving a search reply transmitted in response to the search request and determining one base station radio, to which the packet is to be transmitted, in accordance with an identifier of the one base station radio which is contained in the search reply. The radio server (1) broadcasts a search request including the address of the mobile unit to all the base station radios (2-n), and transmits the packet destined for the mobile unit (3) via one base station radio which has sent back a reply to the search request.

## Description

### BACKGROUND OF THE INVENTION

### 1. Field of the Invention

The present invention relates to a mobile unit and a radio server for reliably establishing communications in the form of radio communications between the mobile unit and a base station radio. More particularly, the present invention relates to processing executed by the radio server to specify a communication zone in which the mobile unit exists.

### 2. Description of the Related Art

A radio server and a mobile unit used in the related art will be described with reference to the drawing.

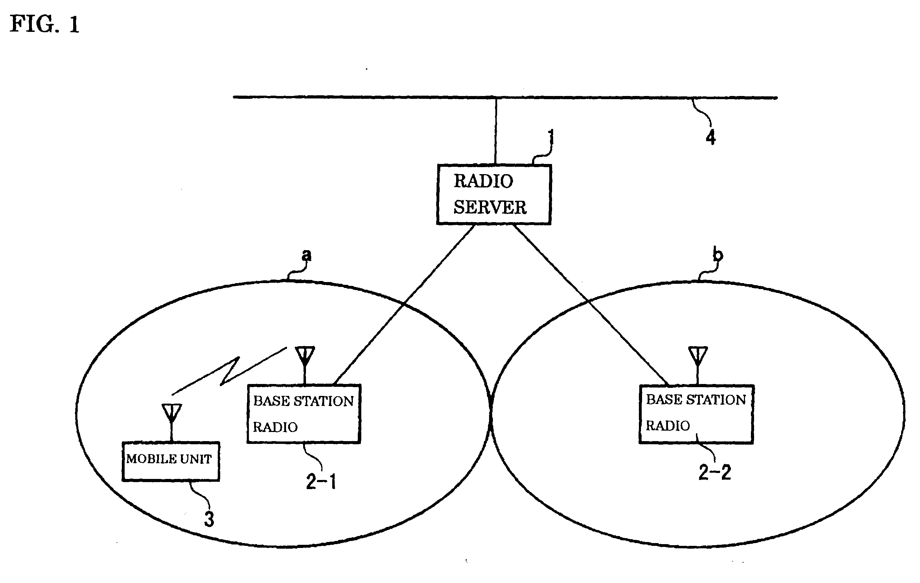

Fig. 1 is a block diagram showing an entire configuration common to the related art and the present invention. Referring to Fig. 1, numeral 1 denotes a radio server which is constituted by a computer system and is connected to the Internet or the like via a network 4. Numeral 2 denotes a base station radio connected to the radio server 1 through wire. Of many base station radios 2-n connected to the radio server 1, only two 2-1 and 2-2 are shown in Fig. 1. Numeral 3 denotes a mobile unit which establishes communications in the form of radio communications between itself and the base station radio 2-1, and which is connected to the radio server 1 via the base station radio 2-1. The mobile unit 3 can be connected to one of the base station radios 2-1 to 2-2 via radio communications, and therefore it can perform communications regardless of geographical movement. Letters *a* and *b* represent respective radio communication enable zones of the base station radios 2-1 and 2-2.

The operations of the radio server 1, the base station radio 2-n, and the mobile unit 3 will be next described with reference to Fig. 1.

It is assumed that the mobile unit 3 is now in the zone *a* where it can communicate with the base station radio 2-1.

First, the mobile unit 3 establishes a communication channel with the base station radio 2-1 via radio communications. Then, the mobile unit 3 transmits a request to the radio server 1 to carry out registration and authentication of the mobile unit 3 as one terminal of the radio server 1. Correspondingly, the radio server 1 replies to the request from the mobile unit 3. The reply enables the mobile unit 3 to operate as one terminal of the radio server 1. As a result, packet data transmitted via the network 4 can be routed to the mobile unit 3.

Since the base station radio 2-n and the mobile unit 3 are thus interconnected via radio communications, the mobile unit 3 can be connected to the base station radio 2-n to serve as one terminal of the radio server 1 even when the mobile unit 3 moves geographically.

In the related art described above, however, upon receiving a registration request from the mobile unit 3, the radio server 1 establishes communications with the mobile unit 3 for transmitting and receiving packets. Accordingly, there is a problem that if the mobile unit 3 moves during a period in which no packets are transmitted and received, the radio server 1 cannot ascertain which base station radio has the communication zone to where the mobile unit 3 has moved, and therefore the radio server 1 cannot specify which base station radio 2-n should be selected for transmitting a packet to the moved mobile unit 3.

### SUMMARY OF THE INVENTION

In view of the state of art set forth above, an object of the present invention is to provide a radio server and a mobile unit, the radio server enabling a packet destined for the mobile unit to be surely routed to the mobile unit even when the mobile unit moves and a communication zone is changed.

According to a first feature of the present invention, in a radio server for establishing communications between the radio server and a mobile unit using radio communications via one of a plurality of base station radios, the radio server broadcasts a search request including an address of the mobile unit to all the base station radios, and transmits a packet destined for the mobile unit via one base station radio which has sent back a reply to the search request.

According to a second feature of the present invention, the above radio server comprises a mobile unit searcher for analyzing the packet destined for the mobile unit and searching the mobile unit based on a destination address of the analyzed packet; a search request transmitter for transmitting the search request including the destination address; and a search reply receiver for receiving a search reply transmitted in response to the search request and determining one base station radio, to which the packet is transmitted, in accordance with an identifier of the one base station radio which is contained in the search reply.

According to a third feature of the present invention, in a radio server for establishing communications between the radio server and a mobile unit using radio communications via one of a plurality of base station radios, the radio server receives a radio zone change notice to notify the fact that a communication zone has changed with movement of the mobile unit, renews a mobile routing table including the mobile unit and the base station radios in correspondent relation in accordance with the radio zone change notice, and specifies one base station radio having the communication zone, in which the mobile unit exists, by referring to the mobile routing table.

According to a fourth feature of the present invention, the radio server comprises a zone detection receiver for receiving the radio zone change notice transmitted from the base station radio; and a receiver decision unit for renewing the mobile routing table including the mobile unit and the base station radios in correspondent relation in accordance with the radio zone change notice.

According to a fifth feature of the present invention, in a mobile unit for establishing communications between the mobile unit and a radio server using radio communications via one of a plurality of base station radios, the mobile unit determines based on broadcasting information broadcast from the base station radio whether a communication zone has changed with movement of the mobile unit, and transmits a radio zone change notice to the radio server at the time the communication zone has changed.

According to a sixth feature of the present invention, the mobile unit comprises a broadcasting information extractor for extracting an identifier of one base station radio contained in the broadcasting information broadcast from the one base station radio, and determining whether the identifier of the base station radio contained in the newly received broadcasting information differs from the identifier of the base station radio contained in the just previously received broadcasting information; and a zone detection unit for transmitting a radio zone change notice at the time it is determined that the identifier of the base station radio contained in the newly received broadcasting information differs from the identifier of the base station radio contained in the just previously received broadcasting information.

According to a seventh feature of the present invention, in a computer-readable recording medium recording a mobile unit search program for executing mobile unit search processing in the radio server according to the first feature, the mobile unit search program recorded on the recording medium runs a computer to execute the following functions: a mobile unit search function for analyzing a packet destined for a mobile unit and searching the mobile unit based on a destination address of the analyzed packet; a search request function for transmitting a search request including the destination address; and a search reply receiving function for receiving a search reply transmitted in response to the search request and determining one of base station radios, to which the packet is transmitted, in accordance with an identifier of the one base station radio which is contained in the search reply.

According to an eighth feature of the present invention, in a computer-readable recording medium recording a receiver decision program for executing receiver decision processing in the radio server according to the third feature, the receiver decision program recorded on the recording medium runs a computer to execute the following functions: a zone detection receiving function for receiving a radio zone change notice transmitted from a base station radio; and a receiver deciding function for renewing a mobile routing table including a mobile unit and base station radios in correspondent relation in accordance with the radio zone change notice.

According to a ninth feature of the present invention, in a computer-readable recording medium recording a zone change notification program for executing zone change notification processing in the radio server according to the fifth feature, the zone change notification program recorded on the recording medium runs a computer to execute the following functions: a broadcasting information extracting function for extracting an identifier of one base station radio contained in the broadcasting information broadcast from the one base station radio, and determining whether the identifier of the base station radio contained in the newly received broadcasting information differs from the identifier of the base station radio contained in the just previously received broadcasting information; and a zone detecting function for transmitting a radio zone change notice at the time it is determined that the identifier of the base station radio contained in the newly received broadcasting information differs from the identifier of the base station radio contained in the just previously received broadcasting information.

### BRIEF DESCRIPTION OF THE DRAWINGS

Fig. 1 is a block diagram showing an entire configuration of one embodiment of the present invention;
Fig. 2 is a block diagram showing a configuration of a radio server 1 shown in Fig. 1;
Fig. 3 is a block diagram showing a configuration of a base station radio 2-n shown in Fig. 1;
Fig. 4 is a block diagram showing a configuration of a radio server 1 according to another embodiment;
Fig. 5 is a block diagram showing a configuration of a mobile unit 3 shown in Fig. 1;
Fig. 6 is a state transition diagram showing the operation of one embodiment; and
Fig. 7 is a state transition diagram showing the operation of another embodiment.

### DESCRIPTION OF THE PREFERRED EMBODIMENT

A radio server according to one embodiment of the present invention will be described below with reference to the drawings.

Fig. 1 is a block diagram showing an entire configuration of the one embodiment. As described above, the entire configuration of the one embodiment shown in Fig. 1 is common to that in the related art.

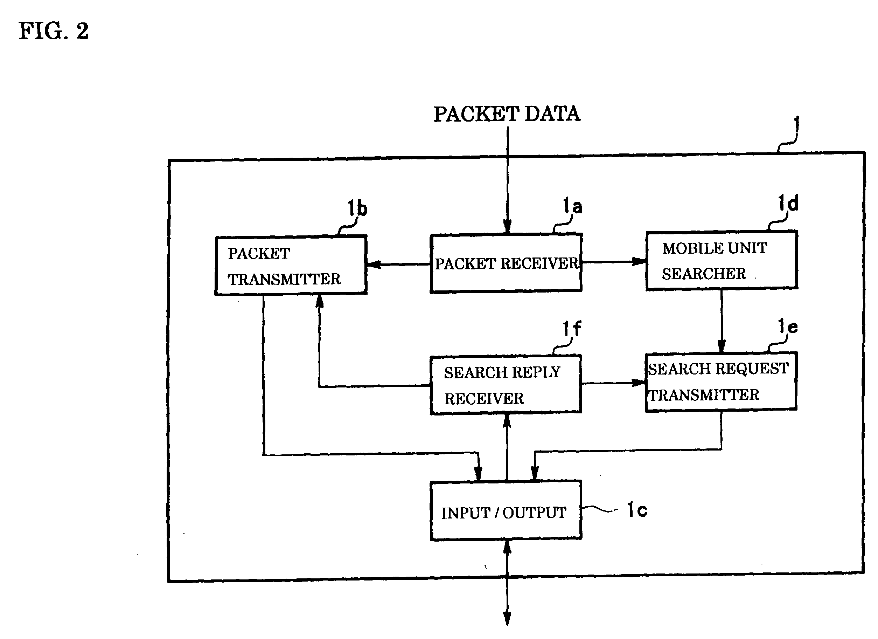

Fig. 2 is a block diagram showing a configuration of a radio server 1 shown in Fig. 1. Referring to Fig. 2, a packet receiver 1a receives a packet transmitted to the radio server 1 via a network 4 (see Fig. 1). A packet transmitter 1b transmits the packet received by the packet receiver 1a to a mobile unit 3 via a base station radio 2-n. An input/output 1c inputs and outputs data from and to the base station radio 2-n. A mobile unit searcher 1d searches the mobile unit 3 which is to receive the packet received by the packet receiver 1a. A search request transmitter 1e transmits a packet of a search request for the mobile unit 3. A search reply receiver 1f receives a search reply packet transmitted as a reply from the mobile unit 3 responsive to the search request.

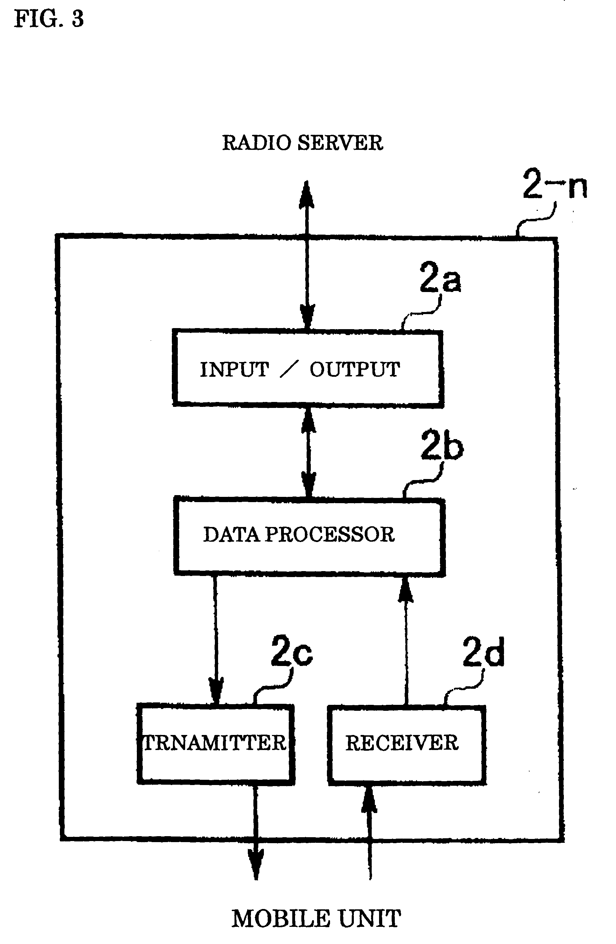

Fig. 3 is a block diagram showing a configuration of the base station radio 2-n shown in Fig. 1. Referring to Fig. 3, an input/output 2a inputs and outputs data from and to the radio server 1. A data processor 2b processes packets transmitted from both the radio server 1 and the mobile unit 3. A transmitter 2c transmits a packet to the mobile unit 3, and a receiver 2d receives a packet from the mobile unit 3.

The operation for transmitting a packet received by the radio server 1 via the network to the mobile unit 3 will be next described with reference to Figs. 2, 3 and 6.

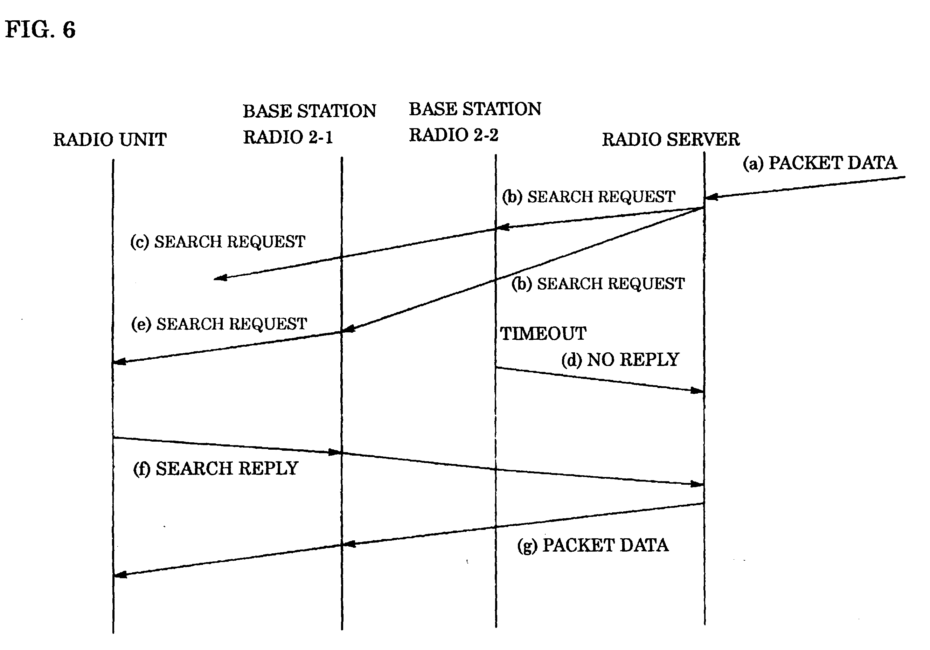

Fig. 6 is a state transition diagram showing the operations of the radio server 1, the base station radios 2-1 and 2-2, and the mobile unit 3. It is here assumed that the mobile unit 3 is now in the communication zone of the base station radio 2-1.

First, the packet receiver 1a receives a packet transmitted via the network 4 (Fig. 6(a)), and holds the packet in the packet receiver 1a. The packet receiver 1a then notifies receipt of the packet to the mobile unit searcher 1d.

Upon receipt notification, the mobile unit searcher 1d analyzes the packet held in the packet receiver 1a and obtains a destination to which the packet is to be transmitted. The term "destination" used here means an address of the mobile unit 3 which is to receive the packet.

Thereafter, the mobile unit searcher 1d notifies the obtained destination address to the search request transmitter 1e. Upon notification, the search request transmitter 1e transmits a search request, which is a packet including the destination address, to all the base station radios 2-n via the input/output 1c for searching the mobile unit 3 having the destination address (Fig. 6(b)).

Then, the data processor 2b provided in each of the base station radios 2-1 and 2-2 receives the search request via the input/output 2a and outputs it to the transmitter 2c. Subsequently, the transmitter 2c broadcasts the search request within the communication zone by using a radio communication channel (Fig. 6(c) and 6(e)).

Thereafter, the data processor 2b in the base station radio 2-2 waits for a predetermined time, and determines whether a reply from the mobile unit 3 has arrived during the waiting time. In this embodiment, since the mobile unit 3 is not in the communication zone of the base station radio 2-2, there occurs a timeout. If no reply is issued responsive to the search request within the predetermined time, the data processor 2b in the base station radio 2-2 transmits to the radio server 1 via the input/output 2a the fact that there has been no reply from the mobile unit 3 called by the base station radio 2-2 (Fig. 6(d)).

On the other hand, since the mobile unit 3 is in the communication zone of the base station radio 2-1, the mobile unit 3 receives the search request broadcast from the base station radio 2-1 and transmits a search reply to the base station radio 2-1 (Fig. 6(f)). Then, the receiver 2d in the base station radio 2-1 receives the search reply and outputs it to the data processor 2b.

Subsequently, the data processor 2b in the base station radio 2-1 receives the search reply and sends it back to the radio server 1. The search reply sent back to the radio server 1 at this time comprises a packet containing the address of the mobile unit 3 and the identifier for identifying the base station radio 2-1 having the communication zone in which the mobile unit 3 exists. That packet serves as a search reply.

Thereafter, the search reply receiver 1f receives via the input/output 1c the search reply transmitted from the mobile unit 3. The search reply receiver if notifies, to the packet receiver 1b, the address of the mobile unit 3 and the identifier of the base station radio 2-1 having the communication zone in which the mobile unit 3 exists, the address and the identifier being both contained in the search reply.

Then, the packet receiver 1b reads, from the packet receiver 1a, the packet destined for the address of the mobile unit 3 notified from the search reply receiver 1f. The read packet is transmitted via the input/output 1c in accordance with the identifier of the base station radio notified from the search reply receiver 1f (Fig. 6(g)).

Finally, the data processor 2b in the base station radio 2-1 transmits the packet, which has been transmitted from the radio server 1, to the mobile unit 3 via the transmitter 2c.

As described above, even when it is not ascertained which base station radio has the communication zone where the mobile unit 3 now exists, a packet can be surely routed to the mobile unit 3 by broadcasting a search request and transmitting the packet to the base station radio 2-n which has sent back a reply to the search request.

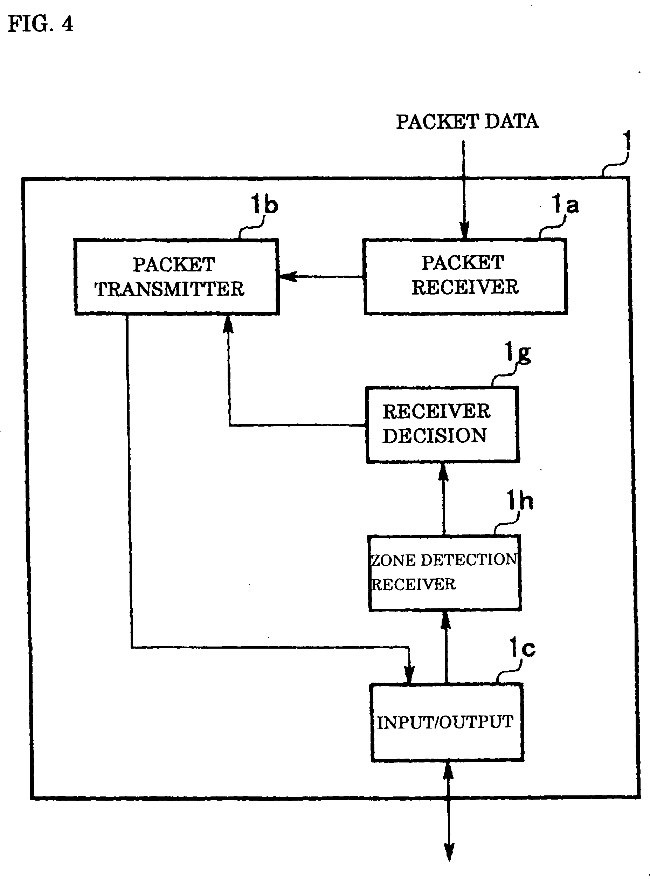

A radio server and a mobile unit according to another embodiment will be next described with reference to Figs. 4, 5 and 7.

Fig. 4 is a block diagram showing a configuration of a radio server 1 according to another embodiment. The configuration shown in Fig. 4 differs from that shown in Fig. 2 in that a receiver decision unit 1g and a zone detection receiver 1h are substituted for the mobile unit searcher 1d, the search request transmitter 1e, and the search reply receiver 1f. The receiver decision unit 1g decides the receiver of a packet (i.e., one of base station radios to which a packet is to be transmitted) based on a notice from the zone detection receiver 1h which receives a zone change notice transmitted from a mobile unit 3.

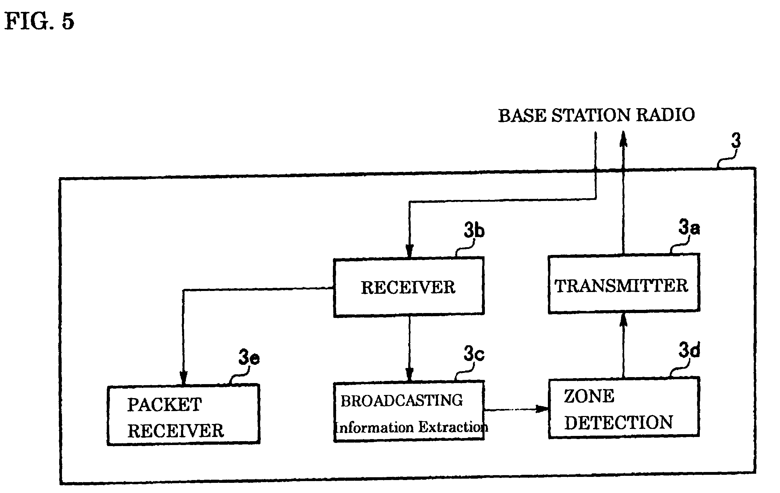

Fig. 5 is a block diagram showing a configuration of the mobile unit 3 according to another embodiment. Referring to Fig. 5, a transmitter 3a transmits a packet to a base station radio 2-n, and a receiver 3b receives a packet transmitted from the base station radio 2-n. A broadcasting information extractor 3c extracts information broadcast from the base station radio 2-n. A zone detection unit 3d determines, based the information notified from the broadcasting information extractor 3c, whether the communication zone has changed, and notifies a zone change upon determining that the communication zone has changed. A packet receiver 3e receives a packet transmitted from a user.

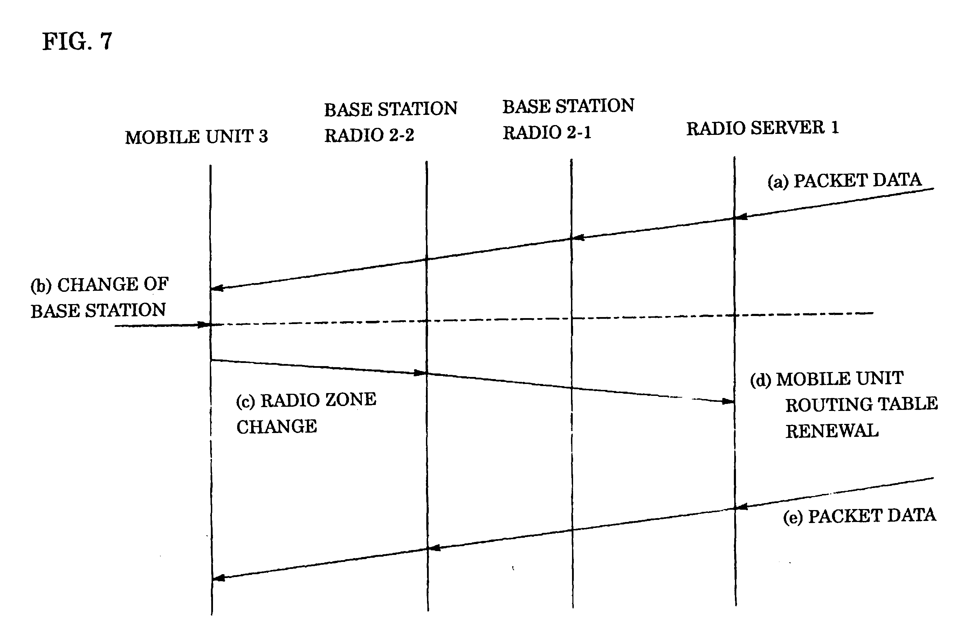

Fig. 7 is a state transition diagram showing the operations of the radio server 1, the base station radios 2-1 and 2-2, and the mobile unit 3 in another embodiment.

The operations of the radio server 1 and the mobile unit 3 will be next described with reference to Figs. 4, 5 and 7. It is here assumed that the mobile unit 3 is now in the communication zone of the base station radio 2-1. It is also assumed that the mobile unit 3 is powered up and terminal registration to the radio server 1 has been completed at this point in time.

First, the packet receiver 1a receives a packet transmitted via the network 4 (Fig. 7(a)), and holds the packet in the packet receiver 1a.

Then, the packet transmitter 1b reads the packet held in the packet receiver 1a and obtains a destination address to which the packet is to be transmitted. Subsequently, the packet transmitter 1b inquires the receiver decision unit 1g and obtains the identifier of the base station radio 2-n in which the mobile unit 3 having the destination address of the packet is registered as a terminal. In this case, the identifier of the base station radio 2-1 is obtained here.

The packet transmitter 1b then transmits the packet via the input/output 1c in accordance with the thus-obtained identifier of the base station radio 2-1. The transmitted packet is routed to the mobile unit 3 via the base station radio 2-1.

The receiver 3b provided in the mobile unit 3 receives the packet and transfers it to the packet receiver 3e. The packet having arrived at the packet receiver 3e is processed to be, for example, displayed on a display (not shown) connected to the mobile unit 3.

It is assumed that, at this point in time, the mobile unit 3 has moved from the communication zone of the base station radio 2-1 to the communication zone of the base station radio 2-2 (Fig. 7(b)).

A description will be next made of the operation that is executed when the communication zone is changed with movement of the mobile unit 3.

The receiver 3b provided in the mobile unit 3 receives broadcasting information broadcast from the base station radio 2-1 or 2-2. The broadcasting information is provided in the form of a packet containing the identifier of the base station radio. Whether or not to output the packet to the packet receiver 3e is determined in accordance with a header added to the packet.

When the received packet provides the broadcasting information, the receiver 3b transfers the broadcasting information to the broadcasting information extractor 3c. The broadcasting information extractor 3c receives the broadcasting information and extracts the identifier of the base station radio 2-n contained in the broadcasting information. Then, the extracted identifier is compared with the identifier just previously received and held in the extractor 3c, thereby determining whether the extracted identifier is the same as the just previously received identifier. In accordance with a comparison result, it is determined whether the communication zone in which the mobile unit 3 exists has changed.

If the extracted identifier of the base station radio 2-n differs from the just previously received identifier of the base station radio 2-n, the broadcasting information extractor 3c notifies to the zone detection unit 3d the fact that the communication zone has changed. Upon receiving the notification, the zone detection unit 3d transmits, to the base station radio 2-2, a radio zone change notice in the form of a packet containing the address of the mobile unit 3 (Fig. 7(c)). The base station radio 2-2 receives the radio zone change notice and transfers it to the radio server 1.

Thereafter, the zone detection receiver 1h receives the radio zone change notice via the input/output 1c. The zone detection receiver 1h extracts the address of the mobile unit 3 and the identifier of the base station radio 2-2 having transmitted the radio zone change notice, which are both contained in the received radio zone change notice, and then transfers them to the receiver decision unit 1g.

Correspondingly, the receiver decision unit 1g renews a mobile routing table provided therein (Fig. 7(d)). The mobile routing table is a table in which the address of the mobile unit 3 and the base station radio 2-2 having the communication zone, in which the mobile unit 3 exists, are listed in correspondent relation.

By referring to the mobile routing table, the packet transmitter 1b can ascertain to which base station radio 2-n the packet destined for the mobile unit 3 is to be transmitted.

Then, when a new packet destined for the mobile unit 3 arrives at the radio server 1 (Fig. 7(e)), the packet transmitter 1b refers to the mobile routing table provided in the receiver decision unit 1g, thereby finding out the base station radio 2-2, and routes the packet to the mobile unit 3 via the base station radio 2-2.

As described above, the mobile unit 3 transmits a radio zone change notice to the radio server 1 each time the communication zone is changed, and the radio server 1 renews the mobile routing table upon receiving each radio zone change notice. Hence, even when the communication zone is changed with movement of the mobile unit 3, a packet can be surely routed to the mobile unit 3.

The mobile unit search processing and the receiver decision processing, described above, may be executed by recording programs for carrying out the functions, shown in Figs. 2, 4 and 5, on a computer-readable recording medium, loading the programs recorded on the recording medium into a computer system, and running the loaded programs. The term "computer system" used herein includes OS and hardware such as peripheral equipment. Also, the term "computer-readable recording medium" means any of portable media such as floppy disks, magneto-optical disks, ROMs and CD-ROMs, and storage devices such as hard disks incorporated in computer systems.

Additionally, the term "computer-readable recording medium" further includes any of media for dynamically holding programs for a short time, e.g., communication channels including networks for the Internet and communication lines for telephone through which programs are transmitted, as well as any of media for holding programs for a certain period of time, e.g., volatile memories in computer systems equipped on both the server and client sides when programs are transmitted through communication channels. Moreover, the programs recorded on a recording medium may carry out a part of the above-described functions, or may be combined with another program already recorded in a computer system to thereby carry out the above-described functions.

More specifically, in a computer-readable recording medium recording a mobile unit search program for executing mobile unit search processing, the mobile unit search program runs a computer to execute the following functions: a mobile unit search function for analyzing a packet destined for a mobile unit and searching the mobile unit based on a destination address of the analyzed packet; a search request function for transmitting a search request including the destination address; and a search reply receiving function for receiving a search reply transmitted in response to the search request and determining one of base station radios, to which the packet is transmitted, in accordance with an identifier of the one base station radio which is contained in the search reply.

Also, in a computer-readable recording medium recording a receiver decision program for executing receiver decision processing, the receiver decision program runs a computer to execute the following functions: a zone detection receiving function for receiving a radio zone change notice transmitted from a base station radio; and a receiver deciding function for renewing a mobile routing table including a mobile unit and base station radios in correspondent relation in accordance with the radio zone change notice.

Further, in a computer-readable recording medium recording a zone change notification program for executing zone change notification processing, the zone change notification program runs a computer to execute the following functions: a broadcasting information extracting function for extracting an identifier of one base station radio contained in the broadcasting information broadcast from the one base station radio, and determining whether the identifier of the base station radio contained in the newly received broadcasting information differs from the identifier of the base station radio contained in the just previously received broadcasting information; and a zone detecting function for transmitting a radio zone change notice at the time it is determined that the identifier of the base station radio contained in the newly received broadcasting information differs from the identifier of the base station radio contained in the just previously received broadcasting information.

As described above, according to the one aspect of the present invention, at the time a packet destined for a mobile unit arrives at a radio server, the radio server broadcasts a search request and then transmits the packet to a base station radio which has sent back a reply to the search request. Therefore, the radio server can surely route the packet to the mobile unit regardless of whether the radio server knows the communication zone in which the mobile unit exists.

Also, according to another aspect of the present invention, at the time the communication zone is changed with movement of the mobile unit, a radio zone change notice is transmitted from the mobile unit to the radio server, and the radio server renews a mobile routing table in response to each radio zone change notice. Therefore, the radio server can surely route a packet to the mobile unit by transmitting the packet while referring to the mobile routing table.

## Claims

1. A radio server (1) for establishing communications between said radio server (1) and a mobile unit (3) using radio communications via one of a plurality of base station radios (2-n),
wherein said radio server (1) broadcasts a search request including an address of said mobile unit (3) to all said base station radios (2-n), and transmits a packet destined for said mobile unit (3) via one base station radio which has sent back a reply to the search request.

2. A radio server (1) according to Claim 1, wherein said radio server (1) comprises:
a mobile unit searcher (1d) for analyzing the packet destined for said mobile unit (3) and searching said mobile unit (3) based on a destination address of the analyzed packet;
a search request transmitter (1e) for transmitting the search request including the destination address; and
a search reply receiver (1f) for receiving a search reply transmitted in response to the search request and determining one base station radio, to which the packet is to be transmitted, in accordance with an identifier of the one base station radio which is contained in the search reply.

3. A radio server (1) for establishing communications between said radio server (1) and a mobile unit (3) using radio communications via one of a plurality of base station radios (2-n),
wherein said radio server (1) receives a radio zone change notice to notify the fact that a communication zone has changed with movement of said mobile unit (3), renews a mobile routing table including said mobile unit (3) and said base station radios (2-n) in correspondent relation in accordance with the radio zone change notice, and specifies one base station radio having the communication zone, in which said mobile unit (3) exists, by referring to the mobile routing table.

4. A radio server (1) according to Claim 3, wherein said radio server (1) comprises:
a zone detection receiver (1h) for receiving the radio zone change notice transmitted from said base station radio; and
a receiver decision unit (1g) for renewing the mobile routing table including said mobile unit (3) and said base station radios (2-n) in correspondent relation in accordance with the radio zone change notice.

5. A mobile unit (3) for establishing communications between said mobile unit (3) and a radio server (1) using radio communications via one of a plurality of base station radios (2-n),
wherein said mobile unit (3) determines based on broadcasting information broadcast from said base station radio whether a communication zone has changed with movement of said mobile unit (3), and transmits a radio zone change notice to said radio server (1) at the time the communication zone has changed.

6. A mobile unit (3) according to Claim 5, wherein said mobile unit (3) comprises:
a broadcasting information extractor (3c) for extracting an identifier of one base station radio contained in the broadcasting information broadcast from the one base station radio, and determining whether the identifier of the base station radio contained in the newly received broadcasting information differs from the identifier of the base station radio contained in the just previously received broadcasting information; and
a zone detection unit (3d) for transmitting a radio zone change notice at the time it is determined that the identifier of the base station radio contained in the newly received broadcasting information differs from the identifier of the base station radio contained in the just previously received broadcasting information.

7. A computer-readable recording medium recording a mobile unit search program for executing mobile unit search processing in the radio server according to Claim 1, wherein said mobile unit search program recorded on said recording medium runs a computer to execute the following functions:
a mobile unit search function for analyzing a packet destined for a mobile unit (3) and searching said mobile unit (3) based on a destination address of the analyzed packet;
a search request function for transmitting a search request including the destination address; and
a search reply receiving function for receiving a search reply transmitted in response to the search request and determining one of base station radios (2-n), to which the packet is to be transmitted, in accordance with an identifier of the one base station radio which is contained in the search reply.

8. A computer-readable recording medium recording a receiver decision program for executing receiver decision processing in the radio server according to Claim 3, wherein said receiver decision program recorded on said recording medium runs a computer to execute the following functions:
a zone detection receiving function for receiving a radio zone change notice transmitted from a base station radio (2-n); and
a receiver deciding function for renewing a mobile routing table including a mobile unit (3) and base station radios (2-n) in correspondent relation in accordance with the radio zone change notice.

9. A computer-readable recording medium recording a zone change notification program for executing zone change notification processing in the radio server according to Claim 5, wherein said zone change notification program recorded on said recording medium runs a computer to execute the following functions:
a broadcasting information extracting function for extracting an identifier of one base station radio contained in the broadcasting information broadcast from the one base station radio, and determining whether the identifier of the base station radio contained in the newly received broadcasting information differs from the identifier of the base station radio contained in the just previously received broadcasting information; and
a zone detecting function for transmitting a radio zone change notice at the time it is determined that the identifier of the base station radio contained in the newly received broadcasting information differs from the identifier of the base station radio contained in the just previously received broadcasting information.
